# EUROPEAN PATENT APPLICATION

(11) **EP 4 564 785 A1**
(43) Date of publication of application: **04.06.2025**
(21) Application number: 23846007.5
(22) Date of filing: 01.06.2023
(51) Int. Cl.: H04L 67/141

(54) **SERVER DEVICE, COMMUNICATION DEVICE, AND CONTROL SYSTEM**

(30) Priority: 28.07.2022 JP 2022120927
(71) Applicant: Kabushiki Kaisha Toshiba, Tokyo 105-0023 (JP); TOSHIBA INFRASTRUCTURE SYSTEMS & SOLUTIONS CORPORATION, Saiwai-ku Kawasaki-shi Kanagawa 212-0013 (JP)
(72) Inventor: OHNISHI Naoya, Kawasaki-shi, Kanagawa 212-0013 (JP); NAKATANI Hiroshi, Kawasaki-shi, Kanagawa 212-0013 (JP); HIRANO Tatsuma, Kawasaki-shi, Kanagawa 212-0013 (JP); MATSUYAMA Hiroki, Kawasaki-shi, Kanagawa 212-0013 (JP); TAKAYANAGI Yoichi, Kawasaki-shi, Kanagawa 212-0013 (JP); OKABE Motohiko, Kawasaki-shi, Kanagawa 212-0013 (JP)
(74) Representative: AWA Sweden AB
(86) International application number: PCT/JP2023/020509
(87) International publication number: WO 2024/024270

(57) **Abstract**

According to the present embodiment, a server device comprises a communicator, a determiner, and a control operation part. The communicator sequentially receives a plurality of first packets each including a same first signal with respect to each of different pieces of connection information via a network. The determiner determines whether the first signal included in each of the first packets has been already received. The control operation part generates a second signal corresponding to the first signal when the first signal is determined not to have been already received based on the determination.

## Description

### Field

The embodiments of the present invention relate to a server device, a communication device, and a control system.

### Background

There has been considered a control system that executes sequence control or process control, which is executed by a PLC (Programmable Logic Controller) or the like, in a server device via a network such as the Internet. A control system in factories, industrial systems, and the like operates in real time with a certain period. In order to control the system to operate normally, it is required to transmit input/output data within a certain time even when a network delay or the like occurs.

### Citation List

### Patent Literature

Patent Literature 1: Japanese Patent No. 5959452

### Summary

### Technical Problem

However, since a communication band or a communication delay is not ensured in networks such as the Internet, there is a risk that targeted control cannot be executed within a certain period when the control is executed via a network. Also in a case where a plurality of server devices are used, an unexpected communication delay may occur and there is a risk that the control with a certain period cannot be executed. Furthermore, when a firewall or a proxy server is arranged in a network on an edge side in view of security of control systems and the like, there is a case where a communication protocol appropriate for real-time communication such as a UDP (User Datagram Protocol) cannot be used.

In order to solve these problems, an object of the present embodiment is to provide a server device, a communication device, and a control system that can more stably execute control via a network.

### Solution to Problem

According to the present embodiment, a server device comprises a communicator, a determiner, and a control operation part. The communicator sequentially receives a plurality of first packets each including a same first signal with respect to each of different pieces of connection information via a network. The determiner determines whether the first signal included in each of the first packets has been already received. The control operation part generates a second signal corresponding to the first signal when the first signal is determined not to have been already received based on the determination.

### Effect of the Invention

Control via a network can be executed more stably.

### Brief Description of Drawings

[FIG. 1] FIG. 1 is a diagram illustrating a configuration example of a control system according to a first embodiment.
[FIG. 2] FIG. 2 is a table illustrating an example of transmitting connection information to be used by a connector.
[FIG. 3] FIG. 3 is a diagram illustrating a configuration example of an input signal packet transmitted by a transmission manager.
[FIG. 4] FIG. 4 is a table illustrating a method example in a case where connection information is referred to using a during-transmission flag.
[FIG. 5] FIG. 5 is a diagram illustrating a configuration example of an output signal packet to be used by the transmission manager.
[FIG. 6] FIG. 6 is a communication sequence diagram of an initial connection.
[FIG. 7] FIG. 7 is a communication sequence diagram in which an input signal is transmitted to a server device.
[FIG. 8] FIG. 8 is a communication sequence diagram in which an output signal is transmitted from the server device to a communication device.
[FIG. 9] FIG. 9 is a diagram illustrating a configuration example of a control system according to a second embodiment.
[FIG. 10] FIG. 10 is a diagram illustrating an example of a communication sequence of an initial connection according to the second embodiment.
[FIG. 11] FIG. 11 is a communication sequence diagram in which an input signal is transmitted from the communication device to the server device.
[FIG. 12] FIG. 12 is a communication sequence diagram in which an output signal is transmitted from the server device to the communication device.

### Description of Embodiments

A server device, a communication device, and a control system according to embodiments of the present invention will now be explained below with reference to the drawings. The following embodiments are merely examples of the embodiments of the present invention and are not intended to limit the scope of the present invention. In the drawings referred to in the embodiments, same parts or parts having identical functions are denoted by like or similar reference characters and there is a case where redundant explanations thereof are omitted. Further, there are cases where dimensional ratios in the drawings are different from those of actual products and some part of configurations is omitted from the drawings.

### (First embodiment)

### (Configuration)

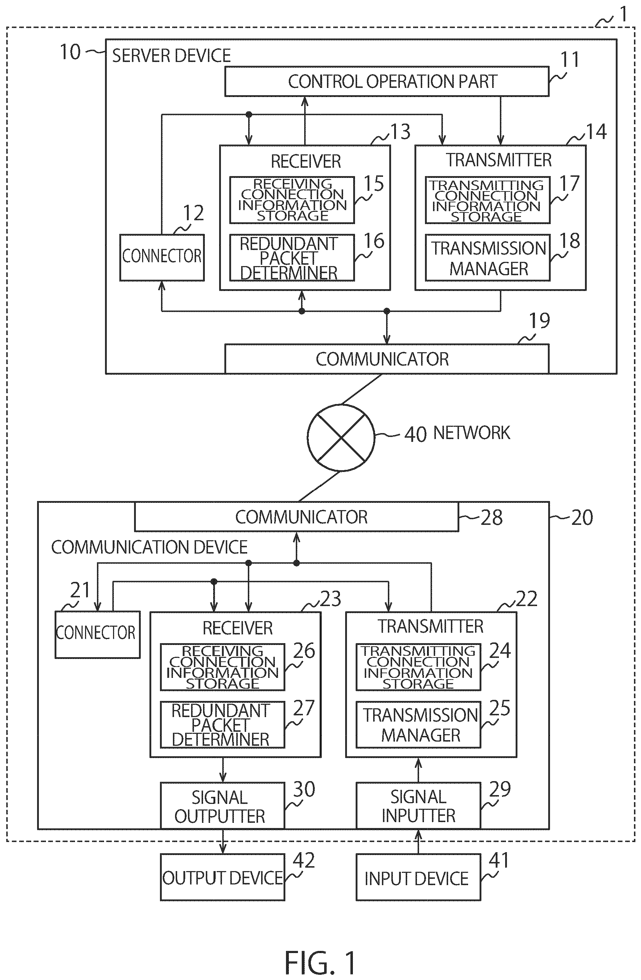

FIG. 1 is a diagram illustrating a configuration example of a control system according to a first embodiment. As illustrated in FIG. 1, a control system 1 includes a server device 10 and a communication device 20. The server device 10 and the communication device 20 are connected to each other via a network 40. That is, the server device 10 is, for example, a computer including a CPU (Censral Processing Unis), a memory, a storage, and the like, and controls devices such as an actuator via the network 40 and the communication device 20.

An input device 41 inputs an input signal as data obtained from a sensor that generates state information of devices such as an actuator. An output device 42 is, for example, a device such as an actuator as a control target of the server device 10. That is, the server device 10 generates a controlling output signal corresponding to an input signal obtained via the communication device 20 and the network 40. The server device 10 then outputs the output signal to the output device 42 via the network 40 and the communication device 20. The input signal according to the present embodiment corresponds to a first signal, and the output signal corresponds to a second signal.

More specifically, the server device 10 includes a control operation part 11, a connector 12, a receiver 13, a transmitter 14, and a communicator 19. The receiver 13 includes a receiving connection information storage 15 that stores therein receiving connection information and a redundant packet determiner 16. The transmitter 14 includes a transmitting connection information storage 17 that stores therein transmitting connection information and a transmission manager 18. Furthermore, for example, the server device 10 can configure the control operation part 11, the connector 12, the receiver 13, the transmitter 14, and the communicator 19 by executing a program stored in the memory. The redundant packet determiner 16 according to the present embodiment corresponds to a determiner. The transmission manager 18 according to the present embodiment corresponds to a first generator. The connector 12 according to the present embodiment may be also referred to as "connection receiver".

The communication device 20 has, for example, a CPU (Censral Processing Unis) and a memory, and includes a connector 21, a receiver 23, a transmitter 22, a communicator 28, a signal inputter 29, and a signal outputter 30. The transmitter 22 has an equivalent configuration as that of the transmitter 14, and includes a transmitting connection information storage 24 that stores therein transmitting connection information and a transmission manager 25. The receiver 23 has an equivalent configuration as that of the receiver 13 and includes a receiving connection information storage 26 that stores therein receiving connection information and a redundant packet determiner 27. For example, the communication device 20 can configure the connector 21, the receiver 23, the transmitter 22, the communicator 28, the signal inputter 29, and the signal outputter 30 by executing a program stored in the memory. The redundant packet determiner 27 according to the present embodiment corresponds to a determiner, and the transmission manager 25 corresponds to a second generator. The connector 21 according to the present embodiment corresponds to a second connector, and the communicator 28 corresponds to a second communicator.

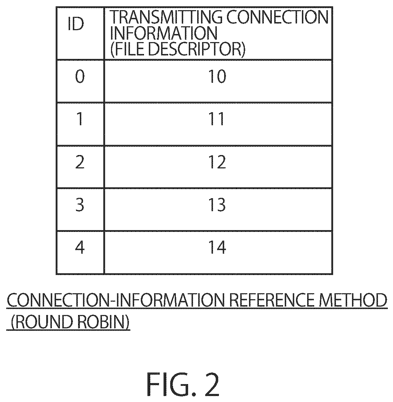

First, a more specific configuration of the communication device 20 is explained. FIG. 2 is a table illustrating an example of transmitting connection information to be used by the connector 21. As illustrated in FIG. 2, the transmitting connection information is a unique number assigned to one device that performs transmission. ID0 to ID4 correspond to individual transmitters or individual communication devices. For example, 10 to 14 are assigned as the transmitting connection information to ID0 to ID4, respectively. That is, each of ID0 to ID4 according to the present embodiment can correspond to, for example, an independent transmitter (or a transceiver described later) or an independent communication device. Accordingly, while the communication device 20 according to the present embodiment is one device, communication processing equivalent to communication processing for a plurality of communication devices or a plurality of transmitters (or transceivers described later) can be performed to the communication device 20.

The connector 21 transmits a connection request from each of ID0 to ID4 to the connector 12 of the server device 10 via the network 40. The connector 12 of the server device 10 having received the connection requests via the network 40 transmits 10 to 14 as the transmitting connection information respectively corresponding to ID0 to ID4 to the communication device 20 as connection responses via the network 40. Accordingly, the transmitting connection information 10 to 14 are assigned to ID0 to ID4, respectively. Therefore, as described above, in the control system 1 according to the present embodiment, while the communication device 20 is one device, a receiving side via the network 40 can perform communication as if there are communication devices as many as the number of IDs or transmitters as many as the number of IDs.

The connector 21 can notify the server device 10 of, for example, information of a set of ID0 to ID4 in advance. The connector 21 stores the transmitting connection information 10 to 14 corresponding to the set of ID0 to ID4 as transmitting connection information or receiving connection information in the transmitting connection storage 24 of the transmitter 22 and the receiving connection information storage 26 of the receiver 23. In this way, the transmitting connection storage 24 stores therein the transmitting connection information 10 to 14 corresponding to the set of ID0 to ID4 as the transmitting connection information after establishment of communication. Similarly, the receiving connection information storage 26 stores therein the transmitting connection information 10 to 14 corresponding to the set of ID0 to ID4 as the receiving connection information after establishment of communication.

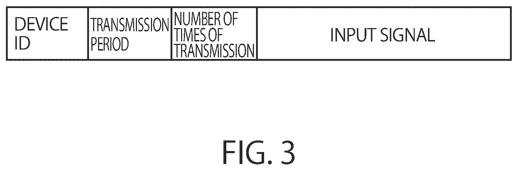

FIG. 3 is a diagram illustrating a configuration example of an input signal packet transmitted by the transmission manager 25 of the communication device 20. The input signal packet is composed of a device ID as an identification number of a communication device, a transmission period indicating what period number the relevant transmission is, the number of times of transmission indicating how many times transmission has been made in the same period, and data of an input signal. The input signal packet according to the present embodiment corresponds to a first packet.

When the same transmission signal is consecutively transmitted in the same period, the transmission manager 25 stores the same value in the transmission period and increments the number of times of transmission. When transmission in the next period is performed, the transmission manager 25 increments the transmission period and resets the number of times of transmission to an initial value. When it is unnecessary to determine the number of times of transmission in which a reached packet has been transmitted, the number of times of transmission can be omitted. When there is only one communication device 20 for one server device 10, the device ID may be omitted.

There is a case where the transmission manager 25 transmits, for example, the same transmission signal ten times in one period. In this case, for example, when the number of connections is five, the transmission manager 25 uses file descriptors being the transmitting connection information as 10 → 11 → 12 → 13 → 14 → 10 → 11 ··· in the order of connections. In this way, in a round robin method, after the transmitting connection information 10 to 14 are assigned in turn to the device ID of each packet, the transmitting connection information 10 to 14 are assigned in turn again. For example, in the case of a first transmission period, 1 is assigned as the transmission period of each packet. As the number of times of transmission of each packet, 0 to 9 are assigned in turn. As described above, the transmission manager 25 repeatedly provides different pieces of connection information in turn according to the order of generation of packets.

More specifically, the transmission manager 25 can assign, for example, information of (the transmitting connection information, the transmission period, the number of times of transmission) to the data head of each packet for the same transmission signal in turn as (10, 0, 0), (11, 0, 1), (12, 0, 2), (13, 0, 3), (14, 0, 4), (10, 0, 5), (11, 0, 6), (12, 0, 7), (13, 0, 8), (14, 0, 9) in this order. In this way, the transmission manager 25 can assign (the transmitting connection information, the transmission period, the number of times of transmission) in turn as if five communication devices having the transmitting connection information 10 to 14 transmit each packet. That is, the same input signal is transmitted repeatedly from the communication device 20 via the communicator 28 while the transmitting connection information and the number of times of transmission are changed. While these packets are sequentially transmitted by the transmission manager 25 from the transmission side, the order of reception thereof on the reception side may be interchanged depending on the environment of the network 40. There may be some packets not received on the reception side due to a firewall or the like.

The transmission manager 25 has a transmission time management function of managing the time interval at the time of transmitting a packet having the same transmission signal plural times. The transmission manager 25 dynamically changes the number of times of transmission and the transmission interval of packets having the same transmission signal, for example, on the basis of a combination of load of the network, a packet loss rate, and a communication time. The load of the network is the amount of communication per unit time. The transmission manager 25 can determine the amount of communication per unit time according to, for example, a return time of an acknowledgement (ACK). The transmission manager 25 determines the packet loss rate on the basis of the number of packets that have the same transmission signal and that have reached within a predetermined time with respect to the number of pieces of the transmitting connection information. The communication time is a time set in advance for communication of one transmission signal.

Accordingly, for example, when the network load is heavy, the transmission manager 25 can reduce the network load by dynamically decreasing the number of times of transmission or lengthening the waiting time. When the packet loss rate is high, the transmission manager 25 increases the number of times of transmission. Accordingly, even when a packet loss occurs, the probability of arrival of data to the server device becomes high.

When a communication delay is great, the transmission manager 25 shortens the waiting time. The transmission manager 25 can obtain information of a communication delay, for example, according to the return time of an acknowledgement (Ack). Accordingly, the time required for repetition by the number of times of transmission can be shortened. For example, the transmitting connection information storage 24 can store therein in advance the number of times of transmission and the waiting time corresponding to the network environment. In this manner, the transmission manager 25 can set the number of times of transmission and the waiting time according to the network environment. In this case, the transmission manager 25 may measure the communication status and dynamically change the number of times of transmission and the waiting time for each IO period.

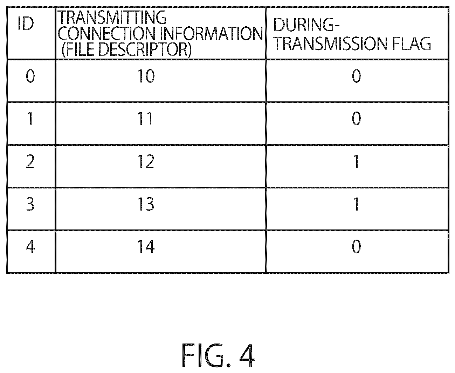

FIG. 4 is a table illustrating a method example in a case where connection information is referred to using a during-transmission flag. The transmission manager 25 can select and use unused file descriptors as illustrated in FIG. 4, in addition to the round robin method described above.

As illustrated in FIG. 4, for example, when the number of connections is five and file descriptors 12 and 13 are being used, the transmission manager 25 uses file descriptors 10, 11, and 14 for three consecutive times of transmission. Since the during-transmission flag changes according to each period, processing to check the transmission flag is performed for each period. The transmission manager 25 can store information of file descriptors being used in the transmitting connection storage 24 as a during-transmission flag (1). Accordingly, the transmission manager 25 refers to the information of the file descriptors being used, which is stored in the transmission connection storage 24, and is enabled to use unused file descriptors with a during-transmission flag (0) for each period. In this way, on the basis of the during-transmission flag (1) that is being transmitted among packets having the same input signal, the transmission manager 25 provides connection information (corresponding to the during-transmission flag (0)) not being used for packets that are being transmitted among the different pieces of connection information, to packets that are generated next.

As described above, the receiver 23 includes the receiving connection information storage 26 and the redundant packet determiner 27. The receiver 23 can receive a plurality of packets having the same output signal transmitted from the server device 10 via the communicator 28.

The redundant packet determiner 27 of the receiver 23 determines whether a transmission signal having the same output signal has been transmitted. For example, the redundant packet determiner 27 refers to the receiving connection information in the receiving connection information storage 26 and determines whether the transmission period is the same as that in information of a combination of the transmitting connection information as reception targets. For example, for packets to which (10, 0, 0), (11, 0, 1), (12, 0, 2), (13, 0, 3), (14, 0, 4), (10, 0, 5), (11, 0, 6), (12, 0, 7), (13, 0, 8), (14, 0, 9) are assigned as information of (the transmitting connection information, the transmission period, the number of times of transmission), the redundant packet determiner 27 first refers to the receiving connection information stored in the receiving connection information storage 26 and determines whether the transmitting connection information is in the range of 10 to 14. Next, when the transmitting connection information are in the range of 10 to 14, the redundant packet determiner 27 determines whether the transmission period is the number 0 of the transmission period that has been received for the first time. When the transmission period is the number 0 having been received for the first time, the redundant packet determiner 27 outputs the received input signal to the signal outputter 30 and stores the number 0 of the transmission period in the receiving connection information storage 26 as receiving connection information.

On the other hand, when the redundant packet determiner 27 refers to the receiving connection information stored in the receiving connection information storage 26 and the number 0 of the transmission period has already been received, the redundant packet determiner 27 determines that this signal is a redundant input signal and performs processing not to output the corresponding output signal to the signal outputter 30.

The communicator 28 of the communication device 20 performs communication with the communicator 19 of the server device 10 via a network interface. Similarly, the communicator 19 of the server device 10 performs communication with the communicator 28 of the communication device 20 via a network interface.

The signal inputter 29 receives input signals output from the input device 41 in chronological order and outputs the signals to the transmitter 22. The signal outputter 30 receives output signals output from the receiver 26 in chronological order and outputs the signals to the output device 42.

A detailed configuration of the server device 10 is explained below. The control operation part 11 generates an output signal corresponding to an input signal supplied from the receiver 13 and outputs the generated output signal to the transmitter 14.

As described above, the connector 12 of the server device 10 transmits 10 to 14 (see FIG. 2) being the transmitting connection information respectively corresponding to ID0 to ID4 to the communication device 20 as connection responses to connection requests of the connector 21 of the communication device 20. The connector 12 can also determine, for example, the number of different pieces of connection information to be issued, on the basis of a combination of the transmission period, the number of times of transmission, and the communication time.

In the present embodiment, the connector 21 of the communication device 20 issues connection requests and the connector 12 of the server device 10 receives the connection requests. However, the present embodiment is not limited thereto. For example, it is possible to have a configuration in which the connector 12 of the server device 10 issues connection requests and the connector 21 of the communication device 20 receives the connection requests. Alternatively, it is possible that the connector 21 of the communication device 20 issues connection requests at the time of transmission of the communication device 20 and the connector 12 of the server device 10 issues connection requests at the time of transmission of the server device 10.

The receiver 13 has an equivalent configuration as that of the receiver 26. That is, the receiver 13 can receive a plurality of packets having the same input signal transmitted from the communication device 20 via the communicator 19.

The redundant packet determiner 16 of the receiver 13 determines whether transmission signals having the same input signal have been transmitted. For example, the redundant packet determiner 16 refers to the receiving connection information in the receiving connection information storage 15 and determines whether the transmission periods are the same in information of a combination of the transmitting connection information as reception targets. For example, for example, for packets to which (10, 0, 0), (11, 0, 1), (12, 0, 2), (13, 0, 3), (14, 0, 4), (10, 0, 5), (11, 0, 6), (12, 0, 7), (13, 0, 8), (14, 0, 9) are assigned as information of (the transmitting connection information, the transmission period, the number of times of transmission), the redundant packet determiner 16 first refers to the receiving connection information stored in the receiving connection information storage 15 and determines whether the transmitting connection information are in the range of 10 to 14. Next, when the transmitting connection information are in the range of 10 to 14, the redundant packet determiner 16 determines whether the transmission period is the number 0 of the transmission period that has been received for the first time. When the transmission period is the number 0 having been received for the first time, the redundant packet determiner 16 outputs the received input signal to the control operation part 11 and stores the number 0 of the transmission period in the receiving connection information storage 15 as receiving connection information.

On the other hand, when the redundant packet determiner 16 refers to the receiving connection information stored in the receiving connection information storage 15 and the number 0 of the transmission period has already been received, the redundant packet determiner 16 determines that this signal is a redundant input signal and performs processing not to output the input signal to the control operation part 11.

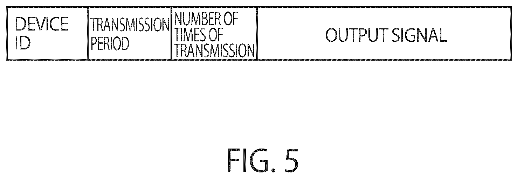

FIG. 5 is a diagram illustrating a configuration example of an output signal packet to be used by the transmission manager 18. Similarly to the input signal packet, the information of (the transmitting connection information, the transmission period, the number of times of transmission) are assigned in turn to the data head of each packet for the same output signal. The output signal packet according to the present embodiment corresponds to a second packet.

The transmitter 14 has an equivalent configuration as that of the transmitter 22. That is, when a signal is consecutively transmitted in the same period, the transmission manager 18 stores the same value in the transmission period and increments the number of times of transmission. When transmission in the next period is performed, the transmission manager 18 increments the transmission period and resets the number of times of transmission to an initial value.

The transmission manager 18 generates packets having the configuration of the output signal packet illustrated in FIG. 5 for the output signal supplied from the control operation part 11. For example, the information of (the transmitting connection information, the transmission period, the number of times of transmission) are assigned in turn as (10, 3, 0), (11, 3, 1), (12, 3, 2), (13, 3, 3), (14, 3, 4), (10, 3, 5), (11, 3, 6), (12, 3, 7), (13, 3, 8), (14, 3, 9) to the data head of each packet for the same output signal. While information common to the server device 10 and the communication device 20 is used as the transmitting connection information in the present embodiment, the transmission connection information is not limited thereto. For example, assignment of transmitting connection information corresponding to ID0 to ID4 may be newly requested from the communication device 20 to the server device 10.

In this way, (the transmitting connection information, the transmission period, the number of times of transmission) are assigned in turn to the data head of each packet having the same output signal as if the packets are transmitted to five communication devices. Accordingly, the same output signal is transmitted repeatedly from the server device 10 while the transmitting connection information and the number of times of transmission are changed. While these packets are sequentially transmitted from the transmission side, the order of reception thereof on the reception side may be interchanged depending on the environment of the network 40. Alternatively, some packets not received on the reception side due to a firewall or the like are generated.

The transmission manager 18 has the same function as that of the transmission manager 25. That is, the transmission manager 18 has a transmission time management function of managing the time interval at the time of transmitting a packet having the same output signal plural times. That is, the transmission manager 18 dynamically changes the number of times of transmission and the transmission interval of packets having the same output signal, for example, on the basis of a combination of load of the network, a packet loss rate, and a communication time. The load of the network is the amount of communication per unit time. The transmission manager 18 determines the amount of communication per unit time, for example, according to a return time of an acknowledgement (Ack). The transmission manager 18 determines the packet loss rate on the basis of the number of packets that have the same transmission signal and that have reached within a predetermined time with respect to the number of pieces of the transmitting connection information. The communication time is a time set in advance for communication of one transmission signal. For example, the transmitting connection information storage 17 can store in advance the number of times of transmission and the waiting time corresponding to the network environment. Accordingly, the transmission manager 18 can set the number of times of transmission and the waiting time according to the network environment. In this case, the transmission manager 18 may measure the communication status and dynamically change the number of times of transmission and the waiting time for each IO period.

The transmission manager 18 repeatedly provides different pieces of connection information in turn according to the order of generation of packets as illustrated in FIG. 2. The transmission manager 18 can provide connection information (corresponding to the during-transmission flag (0)) that are not used for packets being transmitted among the different pieces of connection information to packets that are generated next, on the basis of the during-transmission flag (1) that is being transmitted among packets having the same output signal as illustrated in FIG. 4.

The server device 10 may be a physical server, or may be a virtualized server or a cloud server. The connector 12 and a protocol for receiving a connection in the connector 21 are not limited to a TCP (Transmission Control Protocol) but also may be a TCP-based protocol such an HTTP (Hypertext Transfer Protocol), HTTPS (Hypertext Transfer Protocol Secure), or MQTT (Message Queueing Telemetry Transport), or a UDP-based protocol such as QUIC or MQTT-SN (MQTT for Sensor Networks). The receiver 13 and the transmitter 14 may be allocated to different threads in the OS and be operated parallelly. Similarly, the receiver 23 and the transmitter 22 may be allocated to different threads in the OS and be operated parallelly. QUIC is one of communication rules (protocols) used on IP networks such as the Internet and is aimed at both high-speed performance and security.

The output device 42 may be an IO module that transfers an output signal to devices such as an actuator. Alternatively, the output device 42 may be a module that transfers an input signal or an output signal to an IO module. The server device 10 may be, for example, a virtualized server or a cloud server. Furthermore, the transmission method in the network 40 may be a method via a network, a fieldbus, or the like, or may be a method via an ASIC, an FPGA, or the like. It is also possible to have a configuration in which a plurality of communication devices 20 are connected to one server device 10. The foregoing is explanations of the configuration of the control system 1 according to the first embodiment, and operations thereof are described below.

### (Action)

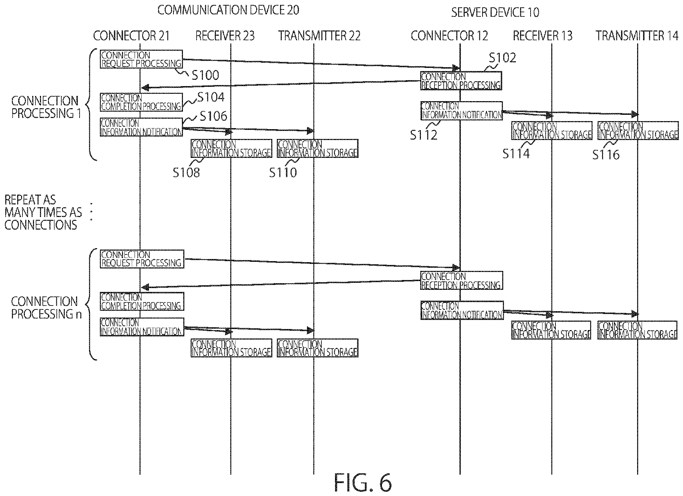

FIG. 6 is a communication sequence diagram of an initial connection according to the present embodiment. FIG. 6 illustrates an example of processing between the connector 21, the transmitter 22, and the receiver 22 of the communication device 20, and the connector 12, the receiver 13, and the transmitter 14 of the server device 10. This is a communication sequence in which the communication device 20 functions as a client of a TCP and connects to the server device 10, and an ACK sequence of the TCP is omitted in the descriptions.

First, the connector 21 of the communication device 20 transmits a connection request to the connector 12 of the server device 10 (Step S100). The connector 12 of the server device 10 having received the connection request transmits a connection response including transmitting connection information to the communication device 20 (Step S102).

Next, the connector 21 of the communication device 20 performs connection completion processing (Step S104), and notifies the receiver 23 and the transmitter 22 of the received transmitting connection information (Step S106). Subsequently, each of the receiving connection information storage 26 of the receiver 23 and the transmitting connection information storage 24 stores therein the transmitting connection information (Steps S108 and S110).

Next, the connector 12 of the server device 10 notifies the receiver 13 and the transmitter 14 of the transmitting connection information (Step S112). Subsequently, each of the receiving connection information storage 15 of the receiver 13 and the transmitting connection information storage 17 stores therein the transmitting connection information (Steps S108 and S110).

In order to establish a plurality of connections, this connection processing (Steps S100 to S110) is repeated as many times as the connections. Accordingly, the receiving connection information storage 15 and the transmitting connection information storage 17 of the server device 10 and the receiving connection information storage 26 and the transmitting connection information storage 24 of the communication device 20 store therein as many pieces of connection information as the connections. The number of the connections may be calculated from a period with which an input signal or an output signal is transmitted, the number of consecutive times of transmission of the same packet, and an average communication time.

In the case of TCP, data larger than a window size cannot be consecutively transmitted, and at the time of reception, an application can receive data only in the order of arrival of packets. Therefore, in order to consecutively transmit the same packet, a plurality of connections are required. For example, in a case where an average communication allocation time per same transmission signal between the server device 10 and the communication device 20 is about one second, shortage of connections does not occur at the time of consecutive transmission when the signal is transmitted three consecutive times with a period of 100 ms (millisecond) and the number of connections is equal to or more than 30 (the number of IDs is equal to or more than 30). That is, 90 same transmission signals can be transmitted during 3×100 ms×30=900 ms, which is within one second.

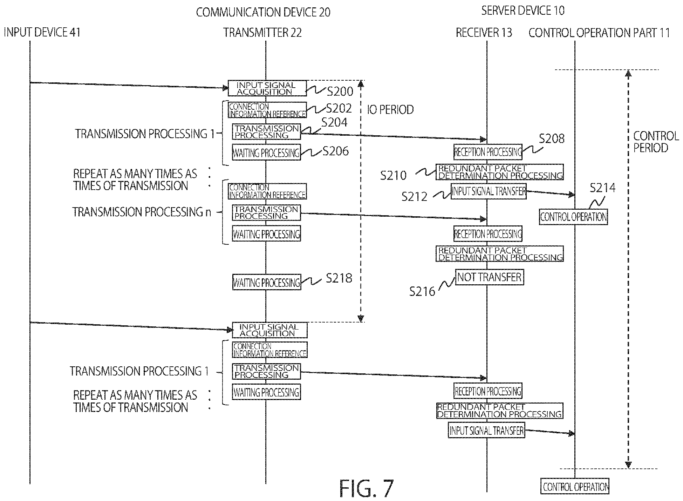

FIG. 7 is a diagram illustrating an example of a communication sequence in which an input signal is transmitted from the communication device 20 to the server device 10. FIG. 7 illustrates an example of processing between the transmitter 22 of the communication device 20, and the control operation part 11 and the receiver 13 of the server device 10.

The transmission manager 25 of the transmitter 22 acquires an input signal from the input device 41 (Step S200), refers to the transmitting connection information in the transmitting connection information storage 24 (Step S202), generates a packet to be transmitted, and transmits an input signal packet (Step S204).

The transmission manager 25 then waits for a certain time as waiting processing (Step S206). If packets are consecutively transmitted without a waiting time, the communication amount per unit time is increased and there is a possibility that the transmission is considered as a DoS attack by a proxy server or a firewall in the network 30 and that the communication is disconnected. Therefore, the transmission manager 25 transmits the next input signal packet after waiting for a certain time.

Next, the receiver 13 of the server device 10 receives the input signal packet (Step S208). Subsequently, the redundant packet determiner 16 of the receiver 13 refers to the receiving connection information stored in the receiving connection information storage 15 to determine whether this signal is an already-received transmission signal (Step S210). Since this is first transmission processing, the redundant packet determiner 16 determines that this signal has not been already received and transfers the input signal to the control operation part 11 (Step S212). The control operation part 11 of the server device 10 generates an output signal corresponding to the input signal (Step S214). In this way, the input signal transferred to the control operation part 11 is used as an input to a control operation.

The transmitter 22 and the receiver 13 repeat this processing n times for the same input signal during the IO period. In this case, in the determination processing of the redundant packet determiner 16 for the second and subsequent times, since the processing is not the first transmission processing, the redundant packet determiner 16 determines that this is an already-received redundant packet and does not transfer the input signal to the control operation part 11 (Step S216). Since the same transmission period (see FIG. 3) is stored in input signal packets that are transmitted in the same IO period, the redundant packet determiner 16 can perform the determination based on a set of the device ID and the transmission period included in each of the input signal packets as described above. After repeating this processing n times, the transmission manager 25 performs waiting processing until the next IO period is started (Step S218). The transmitter 23 of the communication device 20 repeatedly performs n times of the transmission processing from acquisition of an input signal for each IO period.

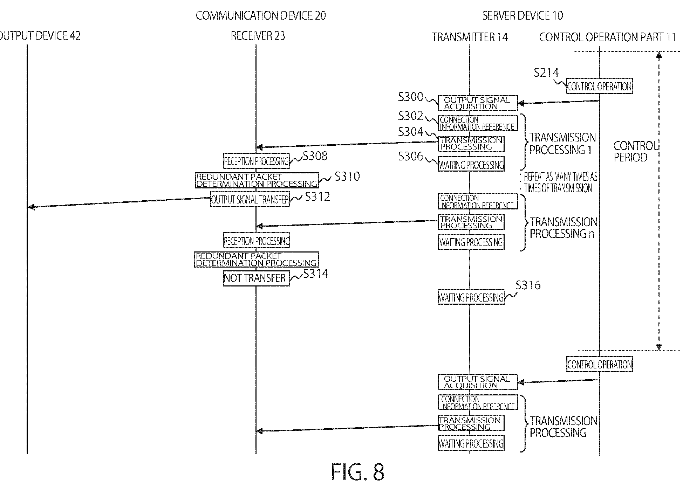

FIG. 8 illustrates a communication sequence diagram in which an output signal is transmitted from the server device 10 to the communication device 20. The control operation part 11 of the server device 10 performs a control operation with a control period. The transmitter 14 acquires an output signal from the control operation part 11 as a result of the control operation. The transmitter 14 may acquire an output signal in synchronization with the control period, or may acquire an output signal with a period asynchronous with or different from the control period. The transmitter 14 refers to the connection information in the same manner as in a case where the communication device 20 transmits an input signal, generates an output signal packet, transmits the output signal packet to the receiver 23 of the communication device 20, and waits for a certain time. The transmission processing is repeated as many times as the number of times of transmission. The number of times of transmission or the waiting time may be different between a case where an input signal is transmitted and a case where an output signal is transmitted.

FIG. 8 is a diagram illustrating an example of a communication sequence in which an output signal is transmitted from the server device 10 to the communication device 20. FIG. 8 illustrates an example of processing between the receiver 23 of the communication device 20, and the control operation part 11 and the transmitter 14 of the server device 10.

The control operation part 11 of the server device 10 generates an output signal corresponding to an input signal (Step S214). The transmission manager 18 of the transmitter 14 acquires the output signal from the control operation part 11 (Step S300), refers to the transmitting connection information in the transmitting connection information storage 17 (Step S302), generates a packet to be transmitted, and transmits an output signal packet (Step S304).

The transmission manager 18 then waits for a certain time as waiting processing (Step S306). Next, the receiver 23 of the communication device 20 receives the output signal packet (Step S308). Subsequently, the redundant packet determiner 276 of the receiver 23 refers to the receiving connection information stored in the receiving connection information storage 26 to determine whether this is an already-received output signal (Step S310). Since this is the output signal for the first time, the redundant packet determiner 27 determines that this signal has not been already received and transfers the output signal to the output device 42 via the signal outputter 30 (Step S312).

The transmitter 14 and the receiver 23 repeat this processing n times for the same output signal during the control period. In this case, in the determination processing of the redundant packet determiner 27 for the second and subsequent times, since the processing is not the first transmission processing, the redundant packet determiner 27 determines that this is an already-received redundant packet and does not transfer the output signal to the output device 42 (Step S314). Since the same transmission period (see FIG. 5) is stored in output signal packets that are transmitted in the same control period, the redundant packet determiner 27 can perform the determination based on a set of the device ID and the transmission period included in each of the output signal packets. After repeating this processing n times, the transmission manager 18 performs waiting processing until the next control period is started (Step S316). The transmitter 14 of the server device 10 then repeatedly performs n times of the transmission processing from acquisition of an output signal for each control period.

### (Effects)

The server device 10 and the communication device 20 are configured in such a manner that a transmission side transmits a packet having the same signal plural times in a row using plural pieces of connection information. This enables a reception side to perform equivalent reception processing to that in a case where packets having the same signal are transmitted from a plurality of devices, respectively. Accordingly, even when a packet loss or a communication delay in packets using connection information corresponding to one device ID occurs, packets using connection information corresponding to another device ID can be received. Therefore, also in a communication protocol based on a TCP, a communication delay can be suppressed and control with a certain period can be executed. Furthermore, even in a case where the transmission side transmits a packet having the same signal plural times in a row using plural pieces of connection information, the redundant packet determiner 16 or 27 on the reception side performs processing to transfer a packet having the same signal only once or not to output the packet. Therefore, occurrence of redundant processing on a device on the reception side is suppressed.

Furthermore, the transmission manager 18 or 25 on the transmission side sets a waiting time when transmitting a packet having the same signal plural times in a row. Accordingly, it is possible to reduce communication load on the network 40, to pass packets through a proxy server or the like including a firewall or a proxy server, and the like.

The connector 12 of the server device 10 and the connector 21 of the communication device 20 determine the number of connections on the basis of the transmission period, the number of times of transmission, and the communication time, and perform connection processing corresponding to the number of connections in advance. This enables consecutive transmission to be performed without shortage of connections even when an unexpected delay occurs.

The transmission manager 18 or 25 on the transmission side dynamically changes the number of times of transmission and the waiting time according to any of information of the communication load on the network 40, the packet loss rate, and the communication time in periodic communication. Accordingly, the number of times of transmission and the waiting time can be changed to be appropriate for the network environment of the network 40, and the packet arrival rate can be enhanced.

The transmission manager 18 or 25 on the transmission side provides connection information to each of packets having the same signal in the round robin manner. This eliminates the need to determine whether each packet having the associated transmitting connection information is being transmitted. Accordingly, the transmission manager 18 or 25 on the transmission side can provide the connection information more quickly to each of packets having the same signal.

The transmission manager 18 or 25 on the transmission side sets a during-transmission flag to each piece of connection information after establishment of communication. Accordingly, when connection information is provided to each of packets having the same signal, the transmission manager 18 or 25 on the transmission side can consecutively transmit the packets using connection information that is not being transmitted.

The transmission manager 25 on the transmission side stores the transmission period in an input signal packet, and the redundant packet determiner 17 on the reception side determines a packet having the same transmission period stored therein as a redundant packet. Accordingly, the redundant packet determination processing can be quickly performed. Similarly, the transmission manager 18 on the transmission side stores the transmission period in an output signal packet and the redundant packet determiner 27 on the reception side determines a packet having the same transmission period as a redundant packet. Accordingly, the redundant packet determination processing can be quickly performed.

Furthermore, the transmission manager 25 on the transmission side stores the connection information corresponding to the device ID and the transmission period in an input signal packet, and the connector 21 notifies the reception side of a set of connection information. The redundant packet determiner 17 on the reception side determines a packet having a set of connection information and having the same transmission period stored therein as a redundant packet. Accordingly, even when there are a plurality of the communication devices 20, the redundant packet determination processing can be quickly performed. Similarly, the transmission manager 18 on the transmission side stores the device ID and the transmission period in an output signal packet, and the redundant packet determiner 27 on the reception side determines a packet having the same device ID and the same transmission period stored therein as a redundant packet. Accordingly, even when there are a plurality of the communication devices 20, the redundant packet determination processing can be quickly performed.

### (Second embodiment)

While each of the server device 10 and the communication device 20 has a single transmitter and a single receiver in the control system 1 according to the first embodiment, a control system 2 according to a second embodiment is different therefrom in that each of the server device 10 and the communication device 20 has a plurality of transceivers. In the following descriptions, differences from the control system 1 according to the first embodiment are described.

### (Configuration)

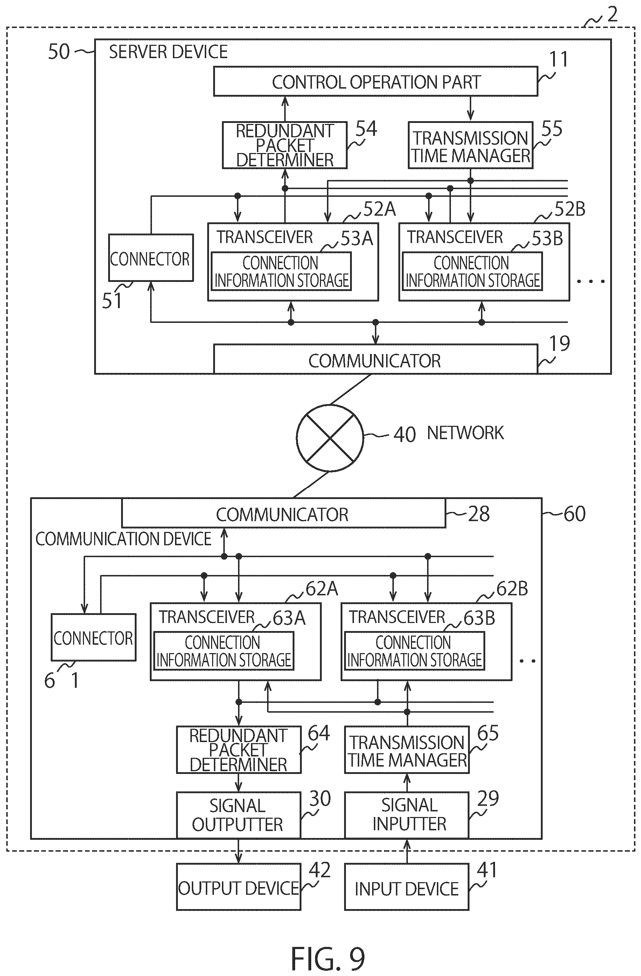

FIG. 9 is a diagram illustrating a configuration example of the control system 2 according to the second embodiment. Elements identical to those illustrated in FIG. 1 are denoted with like reference signs and explanations thereof are omitted.

The control system 2 includes a server device 50 and a communication device 60. The server device 50 and the communication device 60 are connected to each other via the network 40. That is, the communication device 60 receives an input signal including data obtained from the input device 41 and transmits the signal to the server device 50 via the network 40. The server device 50 generates an output signal corresponding to the received input signal and outputs the signal to the output device 42 via the network 40. This server device 50 is, for example, a multicore server and includes a CPU (Censral Processing Unis), a memory, a storage, and the like.

The server device 50 includes the control operation part 11, the communicator 19, a connector 51, a plurality of transceivers 52A to 52G, a redundant packet determiner 54, and a transmission time manager 55. The transceivers 52A to 52G have connection information storages 53A to 53G, respectively. The number of the transceivers 52A to 52G can be set to any number. For example, the server device 50 can configure the control operation part 11, the communicator 19, the connector 51, the transceivers 52A to 52G, the redundant packet determiner 54, and the transmission time manager 55 by executing a program stored in a memory. The redundant packet determiner 54 according to the present embodiment corresponds to a determiner.

The communication device 60 has, for example, a CPU (Censral Processing Unis) and a memory, and includes the communicator 28, the signal inputter 29, the signal outputter 30, a connector 61, a plurality of transceivers 62A to 62G, a redundant packet determiner 64, and a transmission time manager 65. The transceivers 62A to 62G have connection information storages 63A to 63G, respectively. The number of the transceivers 62A to 62G can be set to any number. For example, the communication device 60 can configure the communicator 28, the signal inputter 29, the signal outputter 30, the connector 61, the transceivers 62A to 62G, the redundant packet determiner 64, and the transmission time manager 65 by executing a program stored in the memory. The redundant packet determiner 64 according to the present embodiment corresponds to a determiner and the transceivers 62A to 62G correspond to individual transmitters.

First, a configuration of the server device 50 is explained in detail. The connector 51 of the server device 50 issues pieces of transmitting connection information (see FIG. 5) corresponding to a plurality of IDs in response to a request from the connector 61. The connector 51 assigns the pieces of transmitting connection information corresponding to the IDs in turn to the transceivers 52A to 52G, respectively. Each of the connection information storages 53A to 53G stores therein the pieces of transmitting connection information assigned thereto, respectively.

Each of the transceivers 52A to 52G receives an input signal packet (see FIG. 3) having the transmitting connection information assigned thereto via the communicator 19, and outputs the received packet to the redundant packet determiner 54. The redundant packet determiner 54 determines whether a transmission signal having the same input signal has been transmitted. For example, the redundant packet determiner 54 refers to the transmitting connection information and determines whether the transmission period is the same as that in information of a combination of the transmitting connection information as reception targets to determine whether a transmission signal having the same output signal has been transmitted. The redundant packet determiner 16 transfers the input signal to the control operation part 11 when a transmission signal having the same input signal has been transmitted for the first time. Meanwhile, when a transmission signal having the same input signal has not been transmitted for the first time, the redundant packet determiner 54 determines that this is a redundant input signal and performs processing not to output the input signal to the control operation part 11.

Each of the transceivers 52A to 52G generates an output signal packet (see FIG. 5) including the transmitting connection information assigned thereto, the transmission period supplied from the transmission time manager 55, the number of times of transmission, and an output signal.

The transmission time manager 55 supplies the transmission period, the number of times of transmission, and the output signal to each of the transceivers 52A to 52G each time the output signal is supplied from the control operation part 11. That is, when consecutive transmission is performed in the same period for the same output signal, the transmission time manager 55 supplies the same value as the transmission period, and increments the number of times of transmission to supply the incremented value. When transmission in the next period is performed, the transmission time manager 55 increments the transmission period and resets the number of times of transmission to an initial value. Accordingly, output signal packets respectively generated by the transceivers 52A to 52G for the same output signal are different in the transmitting connection information and the number of times of transmission, and are same in the transmission period. The transmission time manager 55 has a transmission time management function of managing the time interval at the time of transmitting the same packet plural times. The number of the transceivers 52A to 52G is configured to correspond to the number of connections. The transceivers 52A to 52G, the redundant packet determiner 54, and the transmission time manager 55 may be allocated to different threads in the OS to be parallelly operated. The configuration of the transmission time manger 55 and the transceivers 52A to 52G according to the present embodiment corresponds to a first generator, and the transceivers 52A to 52G correspond to a plurality of generators.

A configuration of the communication device 60 is explained in detail next. The connector 61 of the communication device 60 requests the connector 51 of the server device 50 to issue plural pieces of transmitting connection information (see FIG. 5) corresponding to a plurality of IDs. The connector 61 assigns the issued transmitting connection information corresponding to the IDs in turn to the transceivers 62A to 62G, respectively. Each of the connection information storages 63A to 63G stores therein the transmitting connection information assigned thereto, respectively.

Each of the transceivers 62A to 62G receives an output signal packet (see FIG. 5) having the transmitting connection information assigned thereto via the communicator 28 and outputs the received packet to the redundant packet determiner 64. The redundant packet determiner 64 determines whether a transmission signal having the same output signal has been transmitted. For example, the redundant packet determiner 64 refers to the transmitting connection information and determines whether the transmission period is the same as that in information of a combination of the transmitting connection information as reception targets to determine whether a transmission signal having the same output signal has been transmitted. When a transmission signal having the same output signal has been transmitted for the first time, the redundant packet determiner 64 transfers the output signal to the output device 42 via the signal outputter 30. On the other hand, when a transmission signal having the same output signal has not been transmitted for the first time, the redundant packet determiner 64 determines that this is a redundant input signal and performs processing not to transfer the input signal to the output device 42. The number of the transceivers 62A to 62G is configured to correspond to the number of connections. The transceivers 62A to 62G, the redundant packet determiner 64, and the transmission time manager 65 may be allocated to different threads in the OS to be parallelly operated.

Each of the transceivers 62A to 62G generates an input signal packet (see FIG. 3) including the transmitting connection information assigned thereto, and the transmission period, the number of times of transmission, and the input signal supplied from the transmission time manager 65.

The transmission time manager 65 supplies the transmission period, the number of times of transmission, and the input signal to each of the transceivers 62A to 62G each time the input signal is supplied from the input device 41 via the signal inputter 29. That is, when consecutive transmission is performed in the same period for the same input signal, the transmission time manager 65 supplies the same value as the transmission period, and increments the number of times of transmission to supply the incremented value. When transmission in the next period is performed, the transmission time manager 65 increments the transmission period and resets the number of times of transmission to an initial value. Accordingly, input signal packets (see FIG. 3) respectively generated by the transceivers 62A to 62G for the same input signal are different in the transmitting connection information and the number of times of transmission, and are same in the transmission period. The transmission time manager 65 has a transmission time management function of managing the time interval at the time of transmitting the same packet plural times. The configuration of the transmission time manager 65 and the transceivers 62A to 62G according to the present embodiment corresponds to a second generator, and the transceivers 62A to 62G correspond to a plurality of generators.

### (Action)

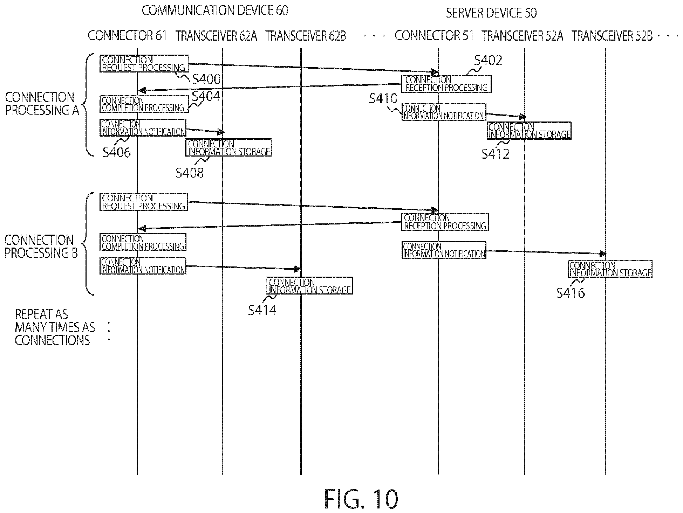

FIG. 10 is a diagram illustrating an example of a communication sequence of an initial connection according to the second embodiment. FIG. 10 illustrates an example of processing between the connector 61 and the transceivers 62A to 62G of the communication device 60, and the connector 51 and the transceivers 52A to 52G of the server device 50. This is a communication sequence in which the communication device 60 functions as a client of a TCP and connects to the server device 50, and an ACK sequence of the TCP is omitted in the descriptions.

First, the connector 61 of the communication device 60 transmits a connection request to the connector 51 of the server device 50 (Step S400). The connector 51 of the server device 50 having received the connection request transmits a connection response including transmission connection information to the communication device 60 (Step S402).

Next, the connector 61 of the communication device 60 performs connection completion processing (Step S404), and notifies the transceiver 62A of the received transmission connection information (Step S406). Subsequently, the connection information storage 63A of the transceiver 62A stores therein the transmission connection information (Step S408).

Next, the connector 51 of the server device 50 notifies the transceiver 52A of the transmission connection information (Step S410). Subsequently, the connection information storage 53A of the transceiver 52A stores therein the transmission connection information (Step S412).

In order to establish a plurality of connections, this connection processing (Steps S400 to S412) is repeated as many times as the connections. In this case, in the second connection processing, the transmission connection information is stored in the connection information storage 63B of the transceiver 62B (Step S414), and is stored in the connection information storage 53B of the transceiver 52B (Step S416). Similarly, in the connection processing for the third and subsequent times, the transmission connection information is stored in a different one of the connection information storages 63C to 63G and in a different one of the connection information storages 53C to 53G in turn.

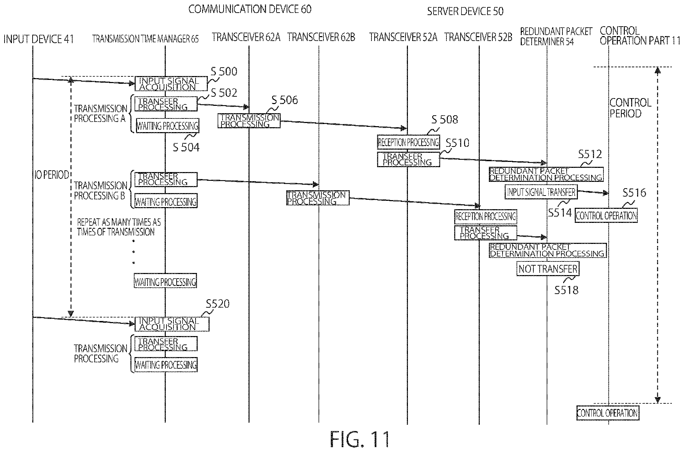

FIG. 11 is a diagram illustrating an example of a communication sequence in which an input signal is transmitted from the communication device 60 to the server device 50. FIG. 11 illustrates an example of processing between the transmission time manager 65 and the transceivers 62A to 62G of the communication device 60, and the control operation part 11, the transceivers 52A to 52G, and the redundant packet determiner 54 of the server device 50.

The transmission time manager 65 acquires an input signal from the input device 41 (Step S500), and transfers the transmission period, the number of times of transmission, and the input signal to the transceiver 62A (Step S502). The transmission manager 25 then waits for a certain time as waiting processing (Step S504).

Next, the transceiver 62A generates a transmission packet signal including its transmission connection information, the transmission period, the number of times of transmission, and the input signal and transmits the generated signal to the server device 50 (Step S506).

Next, the transceiver 52A among the transceivers 52A to 52G of the server device 50 receives the transmission packet signal including its transmission connection information (Step S508), and transfers the received signal to the redundant packet determiner 54 (Step S510). Subsequently, the redundant packet determiner 54 determines whether the input signal is redundant (Step S512). Since this input signal has been transmitted for the first time, the redundant packet determiner 54 determines that this signal is not redundant and transfers the input signal to the control operation part 11 (Step S514). The control operation part 11 generates an output signal corresponding to the input signal (Step S516).

The transceivers 62A to 62G repeat this processing during the IO period under control of the transmission time manager 65. In this case, in the determination processing of the redundant packet determiner 54 for the second and subsequent times, the processing is not the first transmission processing and the redundant packet determiner 54 determines that this is an already-received redundant packet and does not transfer the input signal to the control operation part 11 (Step S518). After repeating this processing from A to G, the transmission time manager 65 performs waiting processing until the next IO period is started (Step S520). The transmission time manager 65 then repeatedly performs the transmission processing from A to G starting from acquisition of an input signal for each IO period.

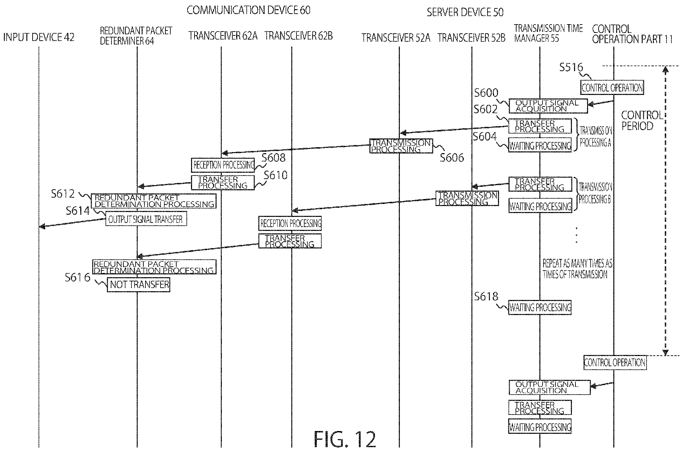

FIG. 12 is a diagram illustrating an example of a communication sequence in which an output signal is transmitted from the server device 50 to the communication device 60. FIG. 12 illustrates an example of processing between the transceivers 62A to 62G and the redundant packet determiner 64 of the communication device 60, and the control operation part 11, the transceivers 52A to 52G, and the transmission time manager 55 of the server device 50.

The control operation part 11 of the server device 50 generates an output signal corresponding to an input signal (Step S516). The transmission time manager 55 acquires the output signal from the control operation part 11 (Step S600), and transfers the transmission period, the number of times of transmission, and the output signal to the transceiver 52A (Step S602). The transmission time manager 55 then waits for a certain time as waiting processing (Step S604).

Next, the transceiver 52A generates an output signal packet (see FIG. 5) including its transmission connection information, the transmission period, the number of times of transmission, and the output signal and transmits the generated packet to the communication device 60 (Step S606).

Next, the transceiver 62A among the transceivers 62A to 62G of the communication device 60 receives the output signal packet including its transmission connection information (Step S608), and transfers the packet to the redundant packet determiner 64 (Step S610). Subsequently, the redundant packet determiner 64 determines whether the output signal is redundant (Step S612). Since this output signal has been transmitted for the first time, the redundant packet determiner 64 determines that this signal is not redundant and transfers the output signal to the output device 42 via the signal outputter 30 (Step S614).

The transceivers 52A to 52G repeat this processing during the control period under control of the transmission time manager 55. In this case, in the determination processing of the redundant packet determiner 64 for the second and subsequent times, since the processing is not the first transmission processing, the redundant packet determiner 64 determines that this is an already-received redundant packet and does not transfer the output signal to the output device 42 (Step S616). After repeating this processing from A to G, the transmission time manager 55 performs waiting processing until the next control period is started (Step S618). The transmission time manager 55 then repeatedly performs the transmission processing from A to G starting from acquisition of an output signal for each control period.

### (Effects)

In the control system 2 according to the present embodiment, it is configured that the transceivers 52A to 52G independently transmit an input signal under control of the transmission time manager 55, and the transceivers 62A to 62G independently transmit an output signal under control of the transmission time manager 65. Accordingly, in addition to the effects of the control system 1 according to the present embodiment, efficient use of a CPU of a multicore server is enabled by parallelly operating the plurality of transceivers 52A to 52G and 62A to 62G, and packets can be transmitted at an accurate time interval.

While certain embodiments have been described, these embodiments have been presented by way of example only, and are not intended to limit the scope of the inventions. Indeed, the novel devices, methods, and programs described herein may be embodied in a variety of other forms. Furthermore, various omissions, substitutions, and changes in the form of the devices, methods, and programs described herein may be made without departing from the spirit of the inventions.

## Claims

1. A server device comprising:
a communicator configured to sequentially receive a plurality of first packets each including a same first signal with respect to each of different pieces of connection information via a network;
a determiner configured to determine whether the first signal included in each of the first packets has been already received; and
a control operation part configured to generate a second signal corresponding to the first signal when the first signal is determined not to have been already received based on the determination.

2. The device of Claim 1, further comprising
a connector configured to provide, via the network, any of the different pieces of connection information to a plurality of individual connection requests made via the network, wherein
the determiner determines whether the first signal has been already received with respect to each of the first packets including any of the different pieces of connection information.

3. The device of Claim 1 or 2, further comprising
a first generator configured to generate a plurality of second packets each including any of the different pieces of connection information provided to the second signal, wherein
the communicator is configured to transmit the second packets via the network.

4. The device of Claim 3, wherein the first generator is capable of changing a transmission interval of the second packets.

5. The device of Claim 3, wherein
the first generator comprises a plurality of generators each corresponding to any of different pieces of connection information and configured to generate a second packet having the corresponding connection information provided to the second signal, and
the generators independently transmit the second packets to the network via the communicator.

6. The device of Claim 3, wherein the connection requests correspond to a plurality of individual transmitters or a plurality of individual communication devices.

7. The device of Claim 2, wherein the connector determines number of the different pieces of connection information to be issued, on a basis of a combination of a transmission period, number of times of transmission, and a communication time.

8. The device of Claim 3, wherein the first generator is configured to dynamically change number of times of transmission and a transmission interval of the second packets on a basis of a combination of load of the network, a packet loss rate, and a communication time.

9. The device of Claim 3, wherein the first generator is configured to repeatedly provide the different pieces of connection information in turn according to an order of generation of the second packets.

10. The device of Claim 3, wherein, on a basis of a flag being transmitted in the second packets, the first generator is configured to provide a piece of the connection information not used for the second packets being transmitted among the different pieces of connection information, to a generated one of the second packet.

11. The device of Claim 3, wherein the first generator causes at least any of connection information corresponding to an identification number of a communication device, a transmission period indicating what period number transmission is, and number of times of transmission indicating how many times transmission has been made in a same period to be included in the second packet.

12. A communication device comprising:
a second connector configured to request a device as a communication target to issue a plurality of connection requests via a network;
a second generator configured to generate a plurality of first packets in each of which any of pieces of connection information respectively corresponding to the connection requests is provided to a first signal; and
a second communicator configured to sequentially transmit the first packets via the network.

13. A control system comprising a server device and a communication device, wherein
the server device comprises
a connector configured to provide, via a network, any of the different pieces of connection information to a plurality of individual connection requests made via the network,
a communicator configured to sequentially receive a plurality of first packets each including a same first signal with respect to each of the different pieces of connection information via the network,
a determiner configured to determine whether the first signal included in each of the first packets has been already received, and
a control operation part configured to generate a second signal corresponding to the first signal when the first signal is determined not to have been already received based on the determination, and
the communication device comprises
a second connector configured to request the individual connection requests respectively corresponding to a plurality of individual transmitters from the server device via the network;
a second generator configured to generate the first packets in each of which any of the different pieces of connection information acquired via the network is provided to the first signal, and
a second communicator configured to sequentially transmit the first packets to the server device via the network.
